# EUROPÄISCHE PATENTSCHRIFT

(11) **EP 3 584 141 B1**
(45) Veröffentlichungstag und Bekanntmachung des Hinweises auf die Patenterteilung: **15.06.2022**
(21) Anmeldenummer: 19176091.7
(22) Anmeldetag: 23.05.2019
(51) Int. Cl.: B62D 15/02, B60W 30/09

(54) **OBJEKTVERMEIDUNG BEIM TRAINIERTEN PARKEN DURCH EINBEZUG EINER RÜCKWÄRTSPLANUNG**
OBJECT AVOIDANCE DURING TRAINED PARKING BY INCORPORATING REVERSE PLANNING
DISPOSITIF PERMETTANT D'ÉVITER DES OBJETS LORS DU STATIONNEMENT ENTRAÎNÉ À L'AIDE D'UNE PLANIFICATION EN AMONT

(30) Priorität: 18.06.2018 DE 102018114497
(43) Veröffentlichungstag der Anmeldung: 25.12.2019
(73) Patentinhaber: Valeo Schalter und Sensoren GmbH, 74321 Bietigheim-Bissingen (DE)
(72) Erfinder: PRINZHAUSEN, Stefanie, 74321 Bietigheim-Bissingen (DE); FUCHS, Fabian, 74321 Bietigheim-Bissingen (DE)
(74) Vertreter: Pothmann, Karsten

(56) Entgegenhaltungen:
- DE-A1-102011 109 712
- DE-A1-102014 202 243
- DE-A1-102015 003 964
- DE-A1-102016 013 711
- DE-A1-102017 114 605

## Beschreibung

Die vorliegende Erfindung betrifft ein Verfahren zum voll- oder teilautonomen Befahren einer Referenztrajektorie mit einem Fahrzeug, wobei bei der Detektion eines Hindernisses im Bereich der Referenztrajektorie mittels mindestens eines Sensors, eine Ausweichtrajektorie angefahren wird, wobei als Startpunkt der Ausweichtrajektorie ein entgegen der bisherigen Bewegungsrichtung des Fahrzeuges zurückliegender, schon befahrener Wegpunkt der Referenztrajektorie gewählt und das Fahrzeug entgegen der bisherigen Bewegungsrichtung entlang der Referenztrajektorie zurück zum Startpunkt der Ausweichtrajektorie und anschließend auf der Ausweichtrajektorie in der ursprünglichen Bewegungsrichtung am Hindernis vorbei auf die Referenztrajektorie gefahren wird.

In Fahrzeugen integrierte, teil- oder vollautonome Prozesse sind in der Lage, für eine Vielzahl unterschiedlicher Verkehrssituationen einen deutlichen Komfortgewinn für den Fahrer zu realisieren. Das Übernehmen wiederkehrender Aufgaben durch das Fahrzeug selbst kann dabei zu einer deutlichen Entlastung der Aufmerksamkeit des Fahrers und so zu einer sichereren und angenehmeren Fahrt beitragen. Diese Vorteile können dabei sowohl durch Prozeduren erreicht werden, welche bei Gefahrensituationen direkt in das Fahrgeschehen eingreifen oder aber alternativ durch Verfahren, welche über Lernprozesse an Referenzgeschehen auf das gewünschte Fahrverhalten trainiert werden. Letztere eignen sich insbesondere zur standardisierten, d.h. wiederholten Kurzstreckennavigation in "ein und derselben" Fahrsituation, beispielsweise beim Einparken in der "home-zone", also im eng begrenzten häuslichen Umfeld, wobei als Grundlage dieser Systeme davon ausgegangen wird, dass sich die räumlichen Gegebenheiten in diesem Bereich nicht oder nur unwesentlich ändern. Die weitgehende Invarianz der Fahrumgebung in diesen Bereichen ist eine der Voraussetzungen, dass dem Fahrzeug in einem schnellen und einfachen Verfahren eine "ungefährliche" also "richtige" Fahrweise, beispielsweise der richtige Einparkweg, antrainiert werden kann. Unglücklicherweise kann die antrainierte Fahrweise versagen, wenn, entsprechend der Lebenswirklichkeit, die Umgebung auch in diesen begrenzten Bereichen nicht invariant ist, sondern unerwartete Hindernisse Abweichungen von der antrainierten Fahrweise erfordern.

Eine Möglichkeit zur Ausgestaltung eines trainierten Fahrens wird beispielsweise in der DE 10 2011 107 974 A1 offenbart. Diese beschreibt ein Verfahren zum Rangieren eines Fahrzeugs in einem Umfeld, wobei in einem Lernmodus das Fahrzeug vom Fahrer gesteuert einen Referenz-Rangiervorgang in dem Umfeld durchführt, welcher abgespeichert wird, und in einem nach dem Lernmodus vom Fahrzeug zumindest semiautonom durchzuführenden Wiederhol-Rangieren in diesem Umfeld der abgespeicherte Referenz-Rangiervorgang für das Wiederhol-Rangieren berücksichtigt wird.

Eine Möglichkeit zum Handling von Hindernissen auf trainierten Trajektorien beschreibt die DE 10 2013 213 225 A1. Diese offenbart ein Verfahren zur Steuerung eines Parkassistenzsystems für ein Fahrzeug, insbesondere für ein Kraftfahrzeug, wobei vom Parkassistenzsystem ein gespeichertes Park- oder Rangiermanöver entlang einer Trajektorie bereitgestellt wird, insbesondere eine gespeicherte Trajektorie abgerufen wird, und wobei über eine Anzeigevorrichtung dem Fahrer die Trajektorie aus einer Startposition bis zu einer Zielposition des Fahrzeuges und Umgebungsobjekte dargestellt werden, und wobei wenigstens ein nicht mit der Trajektorie abgespeichertes Hindernis, das zwischen der Startposition und der Zielposition vor dem Fahrzeug liegt, dem Fahrer angezeigt wird, dadurch gekennzeichnet, dass der Fahrer durch eine Eingabe über ein HMI-Element dem Parkassistenzsystem anweist, wie das Hindernis vom Fahrzeug zu umfahren ist.

Ein anderer Weg zum Umgang mit Abweichungen in der Fahrumgebung kann der DE 10 2014 018 192 A1 entnommen werden. Das Patentdokument beschriebt ein Verfahren zum Steuern eines Fahrzeug, bei welchem aus Fahrdaten des Fahrzeuges eine Solltrajektorie bestimmt wird, welche dem Fahrzeug bei einer automatischen Fahrt zugrunde gelegt wird, wobei bei einer geänderten Umgebung der Fahrt eine, aus aktuellen Fahrdaten des Fahrzeuges ermittelte Trajektorie mit der Solltrajektorie verglichen wird, Abweichungen zwischen der neuen Trajektorie und der Solltrajektorie ermittelt werden und in Abhängigkeit von den Abweichungen eine neue Solltrajektorie eingestellt wird.

Weiterhin wird in der DE 10 2015 210357 A1 ein Verfahren zum Unterstützen eines Fahrers eines Fahrzeugs vorgeschlagen, das eine Lernphase umfasst, in der nach Aktivierung der Lernphase durch den Fahrer ein Fahrmanöver vom Fahrer ausgeführt wird, bei dem das Fahrzeug manuell von einer Startposition entlang einer ersten Trajektorie in eine Zielposition verbracht wird. Dabei werden Informationen über die erste Startposition, sowie Informationen über die erste Trajektorie gespeichert. Das Verfahren umfasst weiterhin eine Ausführungsphase, wobei insbesondere dem Fahrer die Möglichkeit zur Aktivierung einer Unterstützungsfunktion angeboten wird, wenn erkannt wird, dass sich das Fahrzeug an seiner aktuellen Position in einem bestimmten Radius relativ zu der ersten Startposition befindet. Nach Aktivierung der Unterstützungsfunktion wird ein unterstütztes Fahrmanöver von der aktuellen Position zu der Zielposition entlang einer zweiten Trajektorie basierend auf den während der Lernphase gespeicherten Informationen durchgeführt. Erfindungsgemäß ist vorgesehen, dass die zweite Trajektorie derart berechnet wird, dass das Fahrzeug stets einen bestimmten Mindestabstand zu den während der Lernphase erfassten Hindernissen einhält und/oder dass bei Unterschreiten eines bestimmten Mindestabstandes des Fahrzeugs zu einem Hindernis die Bahnregelung derart angepasst wird, das eine Regelabweichung oder Regeltoleranz nicht zu einer weiteren Verringerung des Abstands (D) des Fahrzeugs zu dem Hindernis führt.

In noch einer weiteren Ausgestaltung beschreibt die DE 10 2016 013711 A1 ein Verfahren zum Betreiben eines Kraftfahrzeugs, bei welchem mittels einer elektronischen Recheneinrichtung ein Manövriervorgang durchgeführt wird, in dessen Rahmen eine vor der Durchführung des Manövriervorgangs abgespeicherte und sich von einem Startpunkt zu einem Zielpunkt erstreckende Trajektorie zum automatischen Fahren des Kraftfahrzeugs von dem Startpunkt zu dem Zielpunkt abgerufen und mittels einer Sensoreinrichtung wenigstens ein in der Umgebung des Kraftfahrzeugs und auf der Trajektorie angeordnetes Hindernis erfasst wird, wobei mittels der elektronischen Recheneinrichtung wenigstens eine zumindest teilweise von der abgerufenen Trajektorie unterschiedliche Umfahrungstrajektorie automatisch ermittelt und das Kraftfahrzeug automatisch entlang der Umfahrungstrajektorie gefahren wird, um dadurch das Kraftfahrzeug automatisch von dem Startpunkt zu dem Zielpunkt zu fahren und dabei das Hindernis zu umfahren.

Die DE 10 2014 202243 A1 zeigt ein Verfahren zum Unterstützen eines Fahrers beim Manövrieren eines Fahrzeuges mit folgenden Schritten: a) zyklisches Bereitstellen von Umfelddaten, während sich das Fahrzeug auf einer aktuellen Trajektorie bewegt, b) zyklisches Aktualisieren der aktuellen Trajektorie, wobei eine aktualisierte Trajektorie auf Basis eines aktuellen Lenkeinschlags, einer aktuellen Fahrtrichtung und/oder zumindest eines Teilabschnitts der aktuellen Trajektorie ermittelt wird, c) Führen des Fahrzeuges entlang der in Schritt b) aktualisierten Trajektorie.

Die DE 10 2011 109712 A1 zeigt ein weiteres Verfahren zum Unterstützen eines Fahrers.

Nachteilig an diesen technischen Lösungen ist, dass mittels dieser Verfahren nicht sämtliche Situationen mit veränderlichen Randbedingungen, also insbesondere solche mit Beteiligung von Hindernissen, ohne Abbruch des Verfahrens bewerkstelligt werden können.

Der vorliegenden Erfindung liegt deshalb die Aufgabe zugrunde, ein einfaches und äußerst flexibles Verfahren bereitzustellen, welches in der Lage ist unterschiedliche Arten stationärer und sich bewegender Hindernisse zu erkennen und flexibel und ohne Abbruch des Verfahrens auf diese zu reagieren. Des Weiteren ist es eine Aufgabe der vorliegenden Erfindung, ein Fahrunterstützungssystem bereitzustellen, welches für das oben genannte Verfahren ausgelegt ist, sowie ein Fahrzeug mit einem ebensolchem Fahrunterstützungssystem.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist ein Verfahren zum voll- oder teilautonomen Befahren einer trainierten Referenztrajektorie mit einem Fahrzeug, wobei bei der Detektion eines Hindernisses im Bereich der trainierten Referenztrajektorie mittels mindestens eines Sensors eine Ausweichtrajektorie angefahren wird, wobei als Startpunkt der Ausweichtrajektorie ein entgegen der bisherigen Bewegungsrichtung des Fahrzeuges zurückliegender, schon befahrener Wegpunkt gewählt und das Fahrzeug entgegen der bisherigen Bewegungsrichtung zurück zum Startpunkt der Ausweichtrajektorie und anschließend auf der Ausweichtrajektorie in der ursprünglichen Bewegungsrichtung am Hindernis vorbei auf die trainierte Referenztrajektorie gefahren wird, wobei die Dimensionen und die Bewegungsrichtung des Hindernisses sowohl in der Bewegung des Fahrzeuges in der ursprünglichen Bewegungsrichtung auf das Hindernis zu wie auch entgegen der bisherigen Bewegungsrichtung davon weg, über mindestens einen Sensor erfasst wird und die Festlegung des Startpunktes der Ausweichtrajektorie auf Basis eines Vergleiches der Sensordaten aus beiden Bewegungsrichtungen erfolgt.

Überraschenderweise hat sich herausgestellt, dass oben genanntes Verfahren in der Lage ist, für viele Alltagssituationen eine sichere und praktikable Lösung für autonome oder teilautonome Fahrten bereitzustellen. Insbesondere können, im Vergleich zu dem bekannten Stand der Technik Verfahren, durch dieses Verfahren deutlich mehr und komplexere Hindernis-Situationen ohne Abbruch oder manuellen Eingriff des Fahrers erfolgreich bewältigt werden. Die Abbruchrate des Verfahrens ist äußerst gering und das Verfahren kann sowohl auf Hindernisse reagieren, welche ortsfest sind als auch auf plötzlich auftauchende Hindernisse, welche noch einen zusätzlichen Bewegungsimpuls aufweisen. Zusätzlich senkt das erfindungsgemäße Verfahren auch noch die Anforderungen an die zu verwendenden Sensoren, da über die Umkehr der Bewegungsrichtung in den meisten Fällen ein prinzipiell vom Verfahren festlegbarer Sicherheitsabstand zum Hindernis gewährleistet werden kann. Das Verfahren ist kompatibel mit üblichen lernenden Verfahren, welche auf trainierten Fahrwegen, das heißt Fahrwegen mit einer festgelegten Referenztrajektorie, basieren. Es wird dabei prinzipiell ein kollisionsfreier Pfad unter Zuhilfenahme zurückliegender Pfadpunkte in umgekehrter Fahrtrichtung berechnet, wobei beim Abfahren des Manövers in Vorwärtsrichtung ein Objekt vor dem Fahrzeug erkannt wird, welches das Abfahren der aufgezeichneten Trajektorie verhindert (den Weg blockiert). Ist der Raum zwischen der aktuellen Fahrzeugposition und dem Standort des Objektes zu klein für ein sicheres Fahrmanöver, wird nun von zurückliegenden Pfadpunkten auf der Referenztrajektorie (bereits vom Fahrzeug passiert) geprüft, ob von dort ein kollisionsfreies Ausweichen möglich ist. Um dem Objekt auszuweichen wird das Fahrzeug zu diesem zurückliegenden Pfadpunkt zurückgeführt und das Ausweichmanöver von hier gestartet. Ein weiterer Vorteil des Verfahrens liegt darin, dass die zweistufige Ausführung mit einer Umkehr der Bewegungsrichtung des Fahrzeuges zusätzlich dazu beitragen kann, möglichst aktuelle und "richtige" Daten über das Hindernis zu bekommen. Dies kann dann von Vorteil sein, wenn sich das Hindernis noch und gegebenenfalls unregelmäßig bewegt. Des Weiteren kann es ein psychologischer Vorteil sein, wenn erst einmal ein größerer Abstand zum Hindernis hergestellt wird. Letzteres kann gerade bei schnellen und plötzlich auftauchenden Hindernissen zur Beruhigung des Fahrers (und gegebenenfalls auch des Hindernisses) beitragen.

Das vorliegende Verfahren eignet sich zum voll- oder teilautonomen Befahren von Teilstrecken. Unter autonomem Fahren versteht man dabei, dass der Fahrer eines Fahrzeuges zumindest einen Teil der Fahrzeugführung auf das Fahrzeug auslagert. Dies können beispielsweise die Lenkbewegungen, die Vorgabe der Bewegungsrichtung, die Geschwindigkeit in der Bewegungsrichtung oder aber auch ein vollständiger Stopp des Fahrzeugs sein. In den meisten Fällen ergibt sich eine voll autonome Fahrweise dann, wenn ein Großteil der oben genannten Funktionen über das Fahrzeug selbst gesteuert wird und kein Eingriff des Fahrers erforderlich ist. Entsprechend ergibt sich ein teilautonomes Fahren dann, wenn einige der oben genannten Funktionen über den Fahrer bestimmt werden.

Am Anfang des Verfahrens befindet sich das Fahrzeug auf einer Referenztrajektorie. Das vorliegende Verfahren ist also darauf angewiesen, dass das Fahrzeug schon einmal durch den Fahrer, eine andere Person oder durch eine rein computerbasierte Planung durch eine vergleichbare Fahrsituation innerhalb desselben Umgebungsbereiches gesteuert wurde. Im Rahmen des früheren Durchlaufs wird durch das Verfahren ein "richtiger" insbesondere gefahrloser und kollisionsfreier Fahrweg, also die Referenztrajektorie festgelegt. Das Festlegen der Referenztrajektorie ist nicht Bestandteil des erfindungsgemäßen Verfahrens und kann nach den üblichen Verfahren des Standes der Technik erfolgen. Üblicherweise werden dabei Referenztrajektorien für wiederkehrende Fahrsituation, wie beispielsweise das Einparken im Heimbereich, aufgenommen. Solche Verfahren bieten sich an, da die Umgebungsbedingungen im Heimbereich als im hohen Maße statisch bezeichnet werden können, da üblicherweise sich die räumlichen Gegebenheiten in diesem Bereich nur unwesentlich ändern. Es ist aber auch möglich, Referenztrajektorien für andere Fahrsituationen aufzunehmen. Dies kann beispielsweise bei einem wiederholten Einfahren in ein und dasselbe Parkhaus geschehen oder aber auch bei anderen Gelegenheiten, in denen die Umgebungsbedingungen im Wesentlichen statisch sind. Letzteres ergibt sich insbesondere dann, wenn nicht mit einem fließenden Verkehr zu rechnen ist. Eine Referenztrajektorie im Sinne der Erfindung kann dabei eine einzelne Linie sein, auf welcher sich ein speziell festgelegter Punkt des Fahrzeuges bewegt. Es ist aber auch möglich, dass die Referenztrajektorie eine Fläche darstellt, auf welcher sich das Fahrzeug als solches bewegen kann. Üblicherweise befinden sich auf der Referenztrajektorie keine Hindernisse und es ist ein gefahrloses Befahren der Referenztrajektorie mit dem Fahrzeug möglich.

Fahrzeuge im Sinne der Erfindung sind entweder durch Muskelkraft oder durch Motoren angetriebene Objekte auf Rädern, welche dazu ausgerüstet sind eine oder mehrere Personen aufzunehmen oder Güter zu transportieren.

Auf der Referenztrajektorie oder allgemein auf einem Wegpunkt erfolgt die Detektion eines Hindernisses mittels mindestens eines Sensors. Hindernisse im Sinne der Erfindung sind dabei Objekte, welche beim Durchfahren und der Aufnahme der Referenztrajektorie noch nicht vorhanden waren. Es kann sich dabei um dynamische oder semi-dynamische Hindernisse handeln. Als semi-dynamische Objekte werden vorliegend bewegliche Hindernisse, wie beispielsweise Fahrräder, Mülltonnen oder Spielzeuge verstanden, die tagesweise oder situativ anders gestellt werden können. Die Objekte sind demzufolge beweglich, verbleiben aber in der Regel auf ein und demselben Platz, bis sie durch einen äußeren Eingriff auf einen anderen Platz verbracht werden. Es kann sich aber auch um dynamische Objekte handeln, welche nicht ortsstationär sind, sondern welche auch noch einen mehr oder weniger großen Bewegungsimpuls bei der Detektion aufweisen. Dies kann beispielsweise ein Ball sein, welcher in die Referenztrajektorie rollt. Es kann sich bei den dynamischen Hindernissen aber auch um Fußgänger handeln, welche schneller oder langsamer die Referenztrajektorie kreuzen.

Das Hindernis wird vom Fahrzeug mit der Hilfe mindestens eines Sensors detektiert. Das Fahrzeug kann aber auch zwei oder mehr unterschiedliche Sensoren und/oder Sensortypen aufweisen, welche gemeinsam oder einzelnen zur Detektion von Hindernissen ausgelegt sind. Geeignete Sensortypen sind weiter unten beschrieben.

Als Konsequenz der Detektion eines Hindernisses wird durch das Verfahren eine Ausweichtrajektorie angefahren. Aufgrund des Hindernisses auf dem beabsichtigten Fahrweg, der Referenztrajektorie, ist ein gefahrloses Manövrieren auf dem festgelegten Weg nicht möglich. Das Verfahren sucht insofern eine andere, alternative Streckenführung, welche von der ursprünglich geplanten Referenz abweicht. Die Ausweichtrajektorie ist insofern nicht mit der Referenztrajektorie deckungsgleich. Es ist aber möglich, dass Teile der Ausweich- und der Referenztrajektorie überlappen. Insbesondere können die Endpunkte der beiden Trajektorien gleich sein. Das "Anfahren" der Trajektorie bedeutet in diesem Falle, dass kein Abfahren der Referenztrajektorie in nur einer Richtung stattfindet, sondern dass auf der Referenztrajektorie eine Bewegungsumkehr stattfindet, welche als Vorstrecke zur eigentlichen Ausweichtrajektorie angesehen werden kann. Diese Vorstrecke ist nicht Teil der eigentlichen Referenztrajektorie, da diese Strecke schon einmal befahren wurde und nun in einer anderen Bewegungsrichtung des Fahrzeuges erfolgt. Die Vorstrecke der Ausweichtrajektorie kann aber prinzipiell auf der Referenztrajektorie oder schon einer gefahrenen Ausweichtrajektorie liegen.

Erfindungsgemäß wird als Startpunkt der Ausweichtrajektorie ein entgegen der bisherigen Bewegungsrichtung des Fahrzeuges zurückliegender, schon befahrener Wegpunkt gewählt. Das eigentliche Ausweichmanöver des Fahrzeuges erfolgt durch das Verfahren auf einen zurückliegenden Wegpunkt der Referenztrajektorie oder im Falle des mehrmaligen Durchlaufens des Verfahrens auf einen zurückliegenden Wegpunkt der vorherigen Trajektorie. Insofern wird dieser Punkt als Startpunkt des Ausweichmanövers, also der Ausweichtrajektorie bezeichnet. Wie schon weiter oben ausgeführt wird die Vorstrecke bis zum Erreichen des Startpunktes nicht zur Ausweichtrajektorie im eigentlichen Sinne gezählt, obwohl diese Vorstrecke eine zusätzliche, vom Verfahren geforderte Strecke darstellt. Das Fahrzeug muss sich beim Zurücksetzen auf der Referenztrajektorie oder auf der vorherigen Trajektorie nicht 100%ig auf dieser bewegen. Verfahrensbedingte Abweichungen, wie beispielsweise durch die Messgenauigkeit der Sensoren oder durch die Möglichkeiten zum Steuern des Fahrzeuges gegeben, können dazu führen, dass das Fahrzeug nicht genau auf der Referenztrajektorie fährt. Übliche Abweichungen beim Befahren der Referenztrajektorie in der Hin-und Rückrichtung können beispielsweise im Bereich von 5 - 50 cm liegen. Der Übergang zwischen Referenz- und Vorstrecke sowie Ausweichtrajektorie ergibt sich durch den Wechsel der Bewegungsrichtung des Fahrzeuges.

Das Fahrzeug wird entgegen der bisherigen Bewegungsrichtung entlang der Referenztrajektorie oder der vorherigen Trajektorie zurück zum Startpunkt der Ausweichtrajektorie bewegt. Üblicherweise wird eine Referenztrajektorie nur in einer Bewegungsrichtung durchfahren. Dies beispielsweise beim Einparken im Heimbereich, wobei die Bewegungsrichtung von der Straße zum Parkplatz vor dem Haus oder in eine Garage hinein erfolgt. Es ist auch möglich, dass eine Referenztrajektorie umgekehrt abgefahren wird, also aus der Garage heraus in den öffentlichen Verkehrsraum hinein. Diesen Vorgängen gemein ist, dass das Fahrzeug sich nur in eine Richtung bewegt. Erfindungsgemäß erfolgt das Abfahren dieser Wegstrecke aber unter mindestens zwei Wechsel der Bewegungsrichtung. Erfolgt ein Einparken im Heimbereich, wie weiter unten in den Figuren dargestellt und beschrieben, so erfolgt dieses Einparken in Vorwärtsrichtung. Das erfindungsgemäße Verfahren beinhaltet also, dass zumindest einmal die Vorwärtsbewegung des Fahrzeuges auf der Referenztrajektorie in eine Rückwärtsbewegung und anschließend zum Umfahren des Hindernisses wieder in eine Vorwärtsbewegung umgekehrt wird.

Im letzten Verfahrensschritt wird auf der Ausweichtrajektorie in der ursprünglichen Bewegungsrichtung am Hindernis vorbei auf die Referenztrajektorie gefahren. Am Startpunkt der Ausweichtrajektorie wird die Referenztrajektorie verlassen und durch Lenkbewegung das Hindernis umfahren. Das Umfahren des Hindernisses erfolgt dabei in der ursprünglichen Bewegungsrichtung der Referenztrajektorie. Das Hindernis wird dabei umfahren, wenn es zu keinem physischen Kontakt zwischen dem Fahrzeug und dem Hindernis kommt. Die Ausweichtrajektorie kann dabei nach dem Hindernis wieder zurück auf die Referenztrajektorie zurückführen. Dies bedeutet insbesondere, dass die Ausweichtrajektorie in einen mittleren Teil von der Streckenführung der Referenztrajektorie abweicht. Die Ausweichtrajektorie startet und endet auf der Referenztrajektorie.

In einer bevorzugten Ausgestaltung des Verfahrens kann das Abfahren der Ausweichtrajektorie unter Änderungen der Bewegungsrichtung des Fahrzeuges erfolgen. Es hat sich für die Flexibilität der Trajektorienplanung als besonders geeignet herausgestellt, dass die Ausweichtrajektorie nicht nur auf Basis einer einzigen Bewegungsrichtung des Fahrzeuges geplant werden muss, sondern dass diese Trajektorie unterschiedliche Abschnitte aufweisen kann, welche mit unterschiedlichen Bewegungsrichtungen des Fahrzeuges durchfahren werden können. Diese Planung kann ein besseres Rangieren des Fahrzeuges auch unter schwierigen Umgebungsbedingungen ermöglichen.

Die Dimensionen des Hindernisses werden in der Rückwärtsbewegung auf der schon befahrenen Referenztrajektorie durch mindestens einen Sensor vermessen und der Startpunkt der Ausweichtrajektorie auf Basis einer oder mehrerer Parameter ausgewählt aus der Gruppe bestehend aus Dimensionen des Hindernisses, maximale erlaubte zurücklegbare Distanz, maximale erlaubte Abweichung von der Trajektorie, maximaler Lenkwinkel und Fahrzeuggeschwindigkeit bestimmt. Für das erfindungsgemäße Verfahren hat sich als sehr effizient herausgestellt, die zurückgelegte Strecke auf der Referenztrajektorie oder einer vorher befahrenen Trajektorie nicht fest, sondern als Funktion einer oder mehrerer der oben genannten Parameter zu wählen. Aufgrund der Tatsache, dass sich die Dimensionen des Hindernisses auch zeitlich verändern können, ist es dabei besonders sinnvoll, dass die Dimensionen auch während des Rückwärtsfahrens auf der Referenztrajektorie von mindestens einem Sensor erfasst werden. Davon unbenommen ist natürlich, dass die Dimensionen des Hindernisses auch in der Vorwärtsbewegung auf der Referenztrajektorie vermessen werden. Erkennt der Sensor in der Rückwärtsbewegung, dass es sich um ein sehr großes Hindernis handelt, so kann das Verfahren einen Startpunkt für die Ausweichtrajektorie wählen, welcher weiter vom Hindernis entfernt liegt, als wenn es sich um ein kleineres Hindernis handelt. Es ist möglich, innerhalb des Verfahrens zu implementieren, dass die auf der Referenztrajektorie zurückgelegte Wegstrecke mindestens so groß sein muss wie das Hindernis oder aber auch doppelt oder dreimal so groß. Alternativ kann das Verfahren auf vorgeben, dass die zurückgelegte Wegstrecke auf der Referenztrajektorie mindestens 1 m oder aber auch maximal 2 m betragen kann. Es ist aber auch möglich, den Abstand als komplexe Funktion des Lenkwinkels, der Geschwindigkeit, der Fahrzeugmaße, der Ausdehnung des Hindernisses zu bestimmen. Des Weiteren können beispielsweise auf Basis der oben genannten aktuellen Fahrzeugparameter wie Geschwindigkeit und Lenkwinkel besonders effiziente Startpunkte bestimmt werden, da mit diesen Parametern sicherheitsrelevante und fahrzeugdynamische Aspekte mit einbezogen werden können.

In einer weiteren Ausgestaltung des Verfahrens kann das Hindernis in der Rückwärtsbewegung auf einem schon befahrenen Wegpunkt durch Sensoren vermessen und der Startpunkt und die Streckenführung der Ausweichtrajektorie auf Basis einer oder mehrerer Parameter ausgewählt aus der Gruppe bestehend aus der aktuellen Bewegungsrichtung des Hindernisses, aktuelle Fahrzeugposition, Ausdehnung des Hindernisses bestimmt werden. Auch für den Bereich der Streckenführung auf der Ausweichtrajektorie hat sich als sinnvoll erwiesen, dass die aktuellsten Sensordaten aus der Rückwärtsbewegung auf der Referenztrajektorie verwendet werden. Dies kann insbesondere dazu führen, dass noch Lageänderungen des Hindernisses erkannt und in die Planung der Ausweichtrajektorie eingebunden werden. Dies kann im Vergleich zur Verwendung von Daten aus der Vorwärtsbewegung zu einer besseren Wahl der Streckenführung der Ausweichtrajektorie beitragen. So kann beispielsweise, wenn in der Rückwärtsbewegung festgestellt wird, dass sich das Hindernis in eine Richtung bewegt oder die Ausdehnung des Objektes das Ausweichen in diese Richtung blockiert, die Ausweichtrajektorie sinnvollerweise zur anderen Richtung, also entgegen der Bewegungsrichtung des Hindernisses, geplant werden. Des Weiteren ist es möglich, dass falls über den Sensor erfasst wird, dass es sich um ein sehr kleines unbewegliches Hindernis handelt, beispielsweise um ein liegengebliebenes Spielzeug dessen Dimensionen kleiner sind als die Bodenfreiheit des Fahrzeuges, dass die anschließende Ausweichtrajektorie nahe der Referenztrajektorie über das Hindernis hinweg führt.

In einem weiteren Aspekt des Verfahrens kann vor der Wahl und dem Anfahren des Startpunktes der Ausweichtrajektorie auf einem zurückliegenden Wegpunkt eine erste Ausweichtrajektorie in der ursprünglichen Bewegungsrichtung erstellt und falls möglich befahren werden und in den Fällen, in denen die erste Ausweichtrajektorie in der ursprünglichen Bewegungsrichtung nicht gefahrlos am Hindernis vorbeiführt, eine weitere Ausweichtrajektorie mit einem Startpunkt auf einem zurückliegenden Wegpunkt der vorhergehenden Ausweichtrajektorie erstellt und als neuer Startpunkt der weiteren Ausweichtrajektorie angefahren werden. Das erfindungsgemäße Verfahren kann auch dann sinnvoll genutzt werden, wenn das Zurücksetzen des Fahrzeuges nicht auf der Referenztrajektorie sondern auf einer schon befahrenen Ausweichtrajektorie stattfindet. Dies kann beispielsweise dann nützlich sein, wenn das Verfahren über die Sensormessungen in der Vorwärtsbewegung erkennt, dass eigentlich ein gefahrloses Umfahren des Hindernisses in der Vorwärtsbewegung möglich sein sollte. Es wird also abweichend von der Referenztrajektorie eine Ausweichtrajektorie gewählt und diese befahren. Während des Verfahrens der ersten Ausweichtrajektorie kann es beispielsweise bei beweglichen Hindernissen dazu kommen, dass ein gefahrloses Umfahren des Hindernisses nicht mehr möglich ist. Beispielsweise weil sich das Hindernis auf das Fahrzeug zubewegt. In diesem Fall kann das erfindungsgemäße Verfahren auf der schon befahrenen ersten Ausweichtrajektorie zurücksetzen und ausgehend von dieser, und nicht von der Referenztrajektorie, eine zweite Ausweichtrajektorie befahren. Auf diese Art und Weise können auch sehr komplizierte Hindernissituationen erfolgreich vom Verfahren gemeistert werden.

Innerhalb einer weiteren Charakteristik des Verfahrens kann die maximal zurückgelegte Distanz zwischen der Fahrzeugposition bei der Detektion des Hindernisses und dem Startpunkt der Ausweichtrajektorie größer oder gleich 10% und kleiner oder gleich 200% der Fahrzeugausdehnung in Bewegungsrichtung betragen. Für eine Vielzahl unterschiedlicher Hindernissituationen hat sich als nützlich erwiesen, die maximal zurückgelegte Distanz beim Zurücksetzen vor dem Hindernis als Funktion der Fahrzeugdimensionen festzulegen. Oben angegebene Prozentbereiche sind in Abhängigkeit der Fahrzeuglänge angegeben und sind in vielen Fällen ausreichend, um insbesondere für die auftretenden Hindernisse im Heimbereich einen ausreichend sicheren Abstand bereitzustellen. Des Weiteren ist diese Distanz geeignet, um über weitere Sensordaten eine hinreichend sichere aktuelle Aussage über die Dimensionen und die Bewegungsrichtung des Hindernisses zu erhalten. Größere Distanzen können nachteilig sein, da sich die Lage des Hindernisses in der Vorwärtsbewegung wieder zu stark verändern kann. Kürzere Distanzen können nachteilig sein, da ein sicheres Umfahren des Hindernisses nicht möglich ist.

Die Dimensionen und die Bewegungsrichtung des Hindernisses sowohl in der Bewegung des Fahrzeuges in der ursprünglichen Bewegungsrichtung auf das Hindernis zu wie auch entgegen der bisherigen Bewegungsrichtung davon weg, werden über mindestens einen Sensor erfasst und die Festlegung des Startpunktes der Ausweichtrajektorie auf Basis eines Vergleiches der Sensordaten aus beiden Bewegungsrichtungen erfolgen. Insbesondere für komplexere Hindernissituationen mit sich bewegenden Hindernissen oder Hindernissen, welche ihre Abmessungen verändern können, hatte sich als vorteilhaft erwiesen, die Wahl des Startpunktes der Ausweichtrajektorie auf einen Vergleich mindestens zweier unabhängiger Sensormessungen, einmal aus der Vorwärts- und einmal aus der Rückwärtsbewegung, zu stützen. Durch den Einbezug zweier Messungen lassen sich einfacher die Bewegungsrichtung eines Hindernisses und auch die Regelmäßigkeit in der Bewegung eines Hindernisses erkennen. So kann beispielsweise erfasst werden, dass sich das Hindernis nicht gleichmäßig bewegt, sondern ab einem bestimmten Zeitpunkt seine Bewegungsrichtung verändert hat. In diesen Fällen kann es sinnvoll sein, dass ein größerer Abstand des Startpunktes der Ausweichtrajektorie gewählt wird. Durch diesen Verfahrensschritt kann die Anzahl an Abbrüchen des Verfahrens deutlich reduziert werden.

In einer weiteren Ausgestaltung des Verfahrens kann sowohl der Startpunkt als auch die Ausweichrichtung der Ausweichtrajektorie auf Basis eines Vergleiches der Sensordaten aus beiden Bewegungsrichtungen erfolgen. Neben der Wahl des Startpunktes der Ausweichtrajektorie hatte sich als besonders günstig erwiesen, dass auch die Ausweichrichtung des Fahrzeuges auf der Ausweichtrajektorie anhand des Vergleiches der Sensordaten erstellt wird. Insbesondere kann es sinnvoll sein, dass die aktuellen Daten, welche in der Rückwärtsbewegung erhoben werden, bevorzugt zur Definition der Bewegungsrichtung des Hindernisses genutzt werden. Falls sich ein Wechsel der Bewegungsrichtung zwischen den Sensordaten der Vorwärts- und der Rückwärtsbewegung ergeben hat, so kann das Verfahren beispielsweise vorsehen, dass eine größere Distanz in der Rückwärtsbewegung vorgesehen wird, um einen größeren Abstand zum Hindernis einzuhalten, da es sich anscheinend unregelmäßig bewegt. Liefern die Sensordaten aus beiden Bewegungsrichtung dieselbe Bewegungsrichtung des Hindernisses, so kann die Distanz in der Rückwärtsbewegung kleiner gewählt werden, da sich das Hindernis anscheinend in einer kontinuierlichen Bewegung befindet und bis zum Erreichen des Hindernisses noch eine bestimmte Zeitspanne vergeht. Derart lässt sich eine sichere Ausweichtrajektorie mit einem nur geringen Zeitaufwand für das Ausweichen festlegen.

Innerhalb einer weiteren bevorzugten Ausführungsform des Verfahrens kann die sensorgestützte Detektion auf Sensordaten mindestens eines Sensors ausgewählt aus der Gruppe bestehend aus Ultraschall-, universellen Laser-, Kamera-, RADAR-Sensoren oder Kombinationen dieser ausgewählt sein. Insbesondere diese Gruppe an Sensoren kann mit einer ausreichenden Schnelligkeit und Genauigkeit Daten über die Dimensionen des Hindernisses bereitstellen, so dass ein schnelles und sicheres Verfahren zur Festlegung einer Ausweichtrajektorie bereitgestellt werden kann.

Weiterhin kann in einer Charakteristik des Verfahrens das Fahrzeug die Referenztrajektorie rückwärts durchfahren und der Startpunkt der Ausweichtrajektorie durch ein Vorwärtsfahren des Fahrzeuges erreicht werden. Das erfindungsgemäße Verfahren bietet zudem den Vorteil, dass es unabhängig von der Bewegungsrichtung auf der Referenztrajektorie verwendet werden kann. Es ist also möglich, dieses Verfahren beispielsweise beim Einparken in der heimischen Garage zu nutzen, wie auch beim Ausparken aus der Garage in den öffentlichen Verkehrsraum hinein. In beiden Fällen wird dieselbe Referenztrajektorie verwendet, nur mit einer anderen Bewegungsrichtung.

Innerhalb eines weiteren Verfahrensaspektes kann für den Fall, dass in der Bewegung zum Startpunkt der Ausweichtrajektorie keine hindernisspezifischen Daten erfasst werden, das Fahrzeug wieder in der ursprünglichen Bewegungsrichtung auf der Referenztrajektorie zum Ziel fahren. Durch die Erfassung der Sensordaten auch in der Rückwärtsbewegung (vom Hindernis fort) kann vorteilhafterweise erkannt werden, dass sich das Hindernis aus dem Bereich der Referenztrajektorie entfernt hat. In diesem Fall ist es unnötig oder gar hinderlich eine Ausweichtrajektorie zu befahren und insofern kann ein schnellerer Verfahrensablauf erreicht werden, indem das Fahrzeug in der ursprünglichen Bewegungsrichtung zum Zielpunkt der Referenztrajektorie fährt. Es werden keine hindernisspezifischen Daten erfasst, wenn die verwendeten Sensoren kein Hindernis im Bereich der Referenztrajektorie erkennen.

Des Weiteren erfindungsgemäß ist ein Fahrunterstützungssystem für ein Fahrzeug, wobei das Fahrunterstützungssystem dazu geeignet ist, das vorstehend beschriebene Verfahren auszuführen. Für die Vorteile eines solchen Fahrunterstützungssystems wird auf die Vorteile des vorstehend beschriebenen, erfindungsgemäßen Verfahrens verwiesen. Das Fahrunterstützungssystem weist dabei mindestens eine Steuereinheit auf, welche dazu ausgelegt ist Daten mindestens eines Sensors zu empfangen, die Daten zu verarbeiten, und Handlungsanweisungen an einen Fahrer auszugeben oder das Fahrzeug autonom oder teilautonom zu steuern.

Weiterhin im Sinne der Erfindung ist ein Fahrzeug mit dem erfindungsgemäßen Fahrunterstützungssystem. Das erfindungsgemäße Fahrunterstützungssystem eignet sich insbesondere zum Einbau in Fahrzeugen, wobei für die Vorteile dieser Fahrzeuge mit dem erfindungsgemäßen Fahrunterstützungssystem insbesondere auf die Vorteile des erfindungsgemäßen Verfahrens verwiesen wird.

Diese und weitere Aspekte der Erfindung werden anhand der nachfolgend beschriebenen Ausführungsformen ersichtlich und verdeutlicht.

Die folgenden Figuren dienen zur Verdeutlichung des erfindungsgemäßen Verfahrens. Es zeigt schematisch die:
- Fig. 1: eine bekannte, nicht erfindungsgemäße Ausführungsform der Erfindung, wobei ein nicht ortsfestes Hindernis (5) auf einer trainierten Referenztrajektorie (6) liegt und einzügig über eine Ausweichtrajektorie (7) umfahren wird;
- Fig. 2: eine mögliche Kollisionssituation, in welcher ein Hindernis (5) auf der Referenztrajektorie (6) liegt und mittels herkömmlicher Verfahren nicht mehr umfahren werden kann;
- Fig. 3: eine erfindungsgemäße Ausgestaltung des Verfahrens, wobei erst durch eine Rückwärtsbewegung des Fahrzeuges (2) auf der Referenztrajektorie (6) die Möglichkeit zum Umfahren des Hindernisses (5) auf einer Ausweichtrajektorie (7) ermöglicht wird;
- Fig. 4: eine erfindungsgemäße Ausgestaltung des Verfahrens, wobei eine erste Standard-Ausweichtrajektorie (7) ohne Zurücksetzen befahren, diese aufgrund der Größe eines Hindernisses aber abgebrochen werden muss um über eine Rückwärtsbewegung des Fahrzeuges auf der ersten Ausweichtrajektorie (7) die Möglichkeit zum Umfahren des Hindernisses (5) auf einer zweiten Ausweichtrajektorie (8) zu ermöglichen.

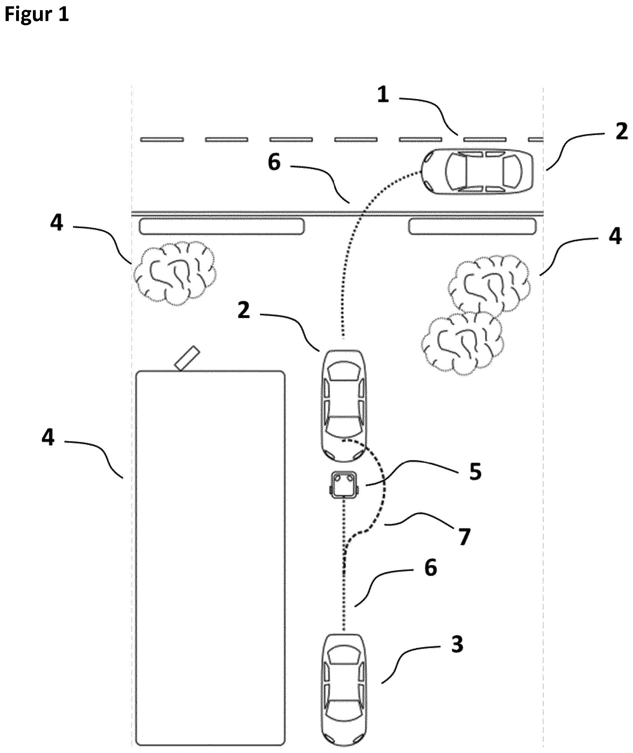

Die Figur 1 zeigt eine Möglichkeit zur Ausführung eines Ausweichmanövers beim trainierten Parken (P4U Home). Dargestellt ist die Umgebungssituation mit unterschiedlichen ortsstationären Hindernissen (4), wie beispielsweise Bäumen, Häusern oder höheren Bordsteinen, ein Fahrzeug (1) in einer möglichen Startposition und die unterschiedlichen Fahrzeugpositionen als Funktion des Verfahrensablaufs. Dargestellt ist das Fahrzeug in der Startposition (1) auf der Referenztrajektorie (6), auf der Referenztrajektorie (6) direkt vor einem dynamisch/semi-dynamischen Hindernis (5) und abschießend in der Parkposition (3). Das Training des Systems wir dadurch erreicht, dass der Fahrzeugführer eines Fahrzeuges (1) mit dem Fahrzeug ein beliebiges Manöver, beispielsweise die Einfahrt auf sein Grundstück mit Einparken in eine Garage, ausführt. Das Manöver kann ein- oder mehrzügig oder aber auch beliebig komplex sein. Vor dem Start des Manövers wird dem System auf ein Signal hin mitgeteilt, dass ein Manöver ausgeführt wird. Nach Abschluss des Fahrmanövers wird die aufgenommene Trajektorie, die Referenztrajektorie (6), im System des Fahrzeuges gespeichert. Das Verfahren kann auf direkte Anforderung durch den Fahrzugführer oder aber auch automatisch ausgeführt werden, sobald das Fahrzeug sich wieder in der Nähe des Startpunktes (1) der gespeicherten Referenztrajektorie (6) befindet ("Replay"). Zusätzlich ist es möglich, dass zum "Ausparken" bzw. Zurückfahren auf die Startposition die Trajektorie auch umgekehrt abgefahren werden kann ("Reverse Replay", nicht dargestellt). Sobald ein Hindernis (5) während eines Replay/Reverse-Replay-Manövers erkannt wird, muss das System diesem Hindernis (5) ausweichen. Dies geschieht standardmäßig in der aktuellen Fahrtrichtung des Fahrzeugs (1, 2). Wird das Objekt (5) aufgrund seiner physikalischen Eigenschaften, der Position und Geschwindigkeit etc. rechtzeitig erkannt, kann die Pfadplanung eine Ausweichtrajektorie (7) berechnen, um an diesem Objekt vorbei zu fahren. Wird das Hindernis (5) nicht rechtzeitig erkannt, kann mit herkömmlichen Verfahren kein kollisionsfreier Pfad am Objekt (5) vorbei berechnet werden. Das Manöver muss vor Erreichen der Zielposition (3) vorzeitig beendet und die Fahrsituation mittels eines manuellen Eingriffs des Fahrzeugführers aufgelöst werden.

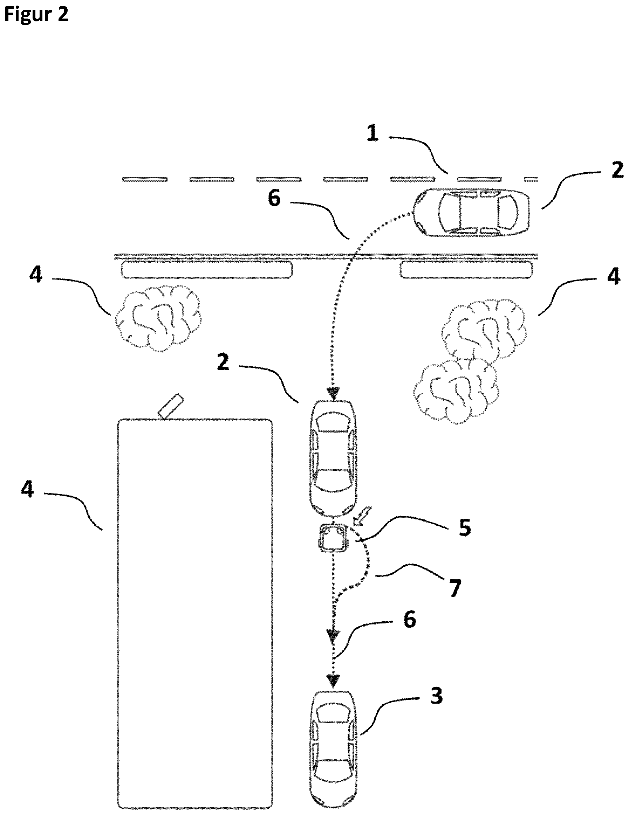

Die Figur 2 zeigt, ebenfalls nicht erfindungsgemäß, eine Möglichkeit des Abbruchs der Verfahren aus dem Stand der Technik. Das Fahrzeug (1, 2) auf der Referenztrajektorie (6) steht zu dicht vor dem dynamisch/semi-dynamischem Hindernis (5), so dass sowohl eine Weiterfahrt auf der gelernten Referenztrajektorie (6) als auch ein Ausweichmanöver auf einer Ausweichtrajektorie (7) unweigerlich zu einer Kollision des Fahrzeuges (2) mit dem dynamisch/semi-dynamisch Hindernis (5) führen würde. Der einzige Ausweg ist der Abbruch des Verfahrens, die Parkposition (3) kann nur manuell erreicht werden.

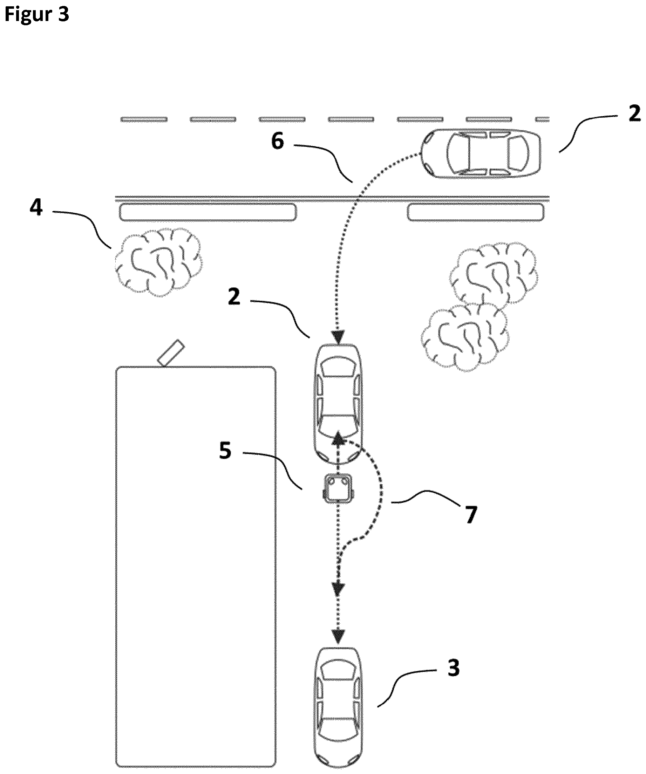

Die Figur 3 zeigt eine mögliche Ausführung des erfindungsgemäßen Verfahrens. Das Fahrzeug (1) befindet sich auf der gelernten Referenztrajektorie (6), wobei die Referenztrajektorie (6) durch ein dynamisch/semi-dynamisches Hindernis (5) blockiert wird. Ein Ausweichen ohne Gefahr einer Kollision mit dem dynamisch/semidynamischen Hindernis (5) ist aufgrund des sehr kleinen Abstandes zwischen dem Fahrzeug (2) auf der Referenztrajektorie (6) und dem dynamisch/semi-dynamischen Hindernis (5) nicht mehr möglich. Erfindungsgemäß führt das Fahrzeug (2) auf der Referenztrajektorie (6) eine Rückwärtsbewegung aus (durch den Pfeil angedeutet), wobei der Abstand zwischen dynamisch/semi-dynamischen Hindernis (5) und dem Fahrzeug (2) auf der Referenztrajektorie (6) vergrößert wird. Ist der Abstand zwischen Fahrzeug (2) auf der Referenztrajektorie (6) und dem dynamisch/semi-dynamischen Hindernis (5) groß genug kann eine Ausweichtrajektorie (7) erstellt werden, welche sicher am dynamisch/semi-dynamischen Hindernis (5) vorbeiführt. Auf diese Art und Weise kann das Fahrzeug (2) sicher und ohne manuellen Eingriff seine Parkposition (3) erreichen. Es ist auch möglich, dass das Verfahren von der Parkposition (3) des Fahrzeuges aus startet und das Fahrzeug (2) die Heimparkzone verlässt. In diesem Falle fährt das Fahrzeug (2) am Hindernis (5) erst ein Stück vorwärts, um dann wieder rückwärtsfahrend eine sichere Ausweichtrajektorie (7) um das dynamisch/semidynamischen Hindernis (5) herum erreichen zu können.

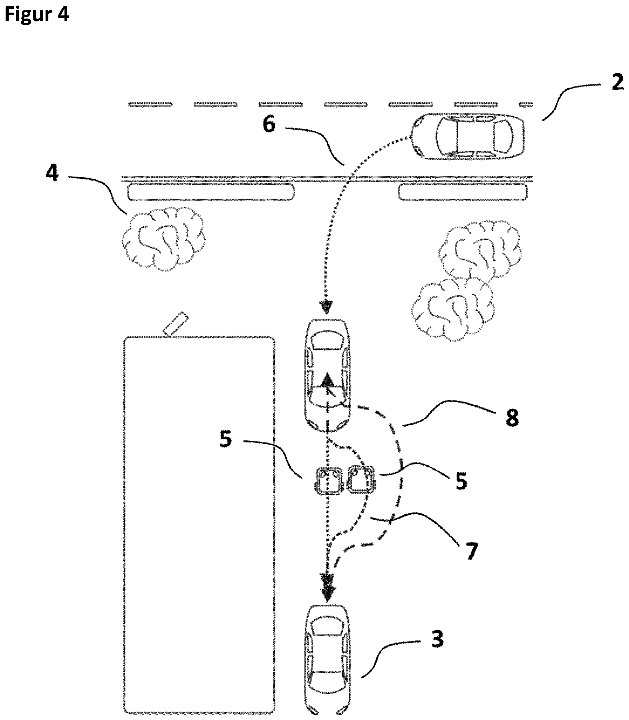

Die Figur 4 zeigt eine weitere mögliche Ausführung des erfindungsgemäßen Verfahrens. Das Fahrzeug (1) befindet sich auf der gelernten Referenztrajektorie, wobei die Referenztrajektorie (6) durch ein dynamisch/semi-dynamisches Hindernis (5) blockiert wird. Ein Ausweichen ohne Gefahr einer Kollision mit dem dynamisch/semidynamischen Hindernis (5) scheint erst einmal möglich und so befährt das Fahrzeug (2) die erste Ausweichtrajektorie (7). Aufgrund einer Lageänderung oder einer zuerst nicht richtig bestimmten Größe des Hindernisses (5) führt die erste Ausweichtrajektorie (7) aber nun nicht mehr gefahrlos am Hindernis (5) vorbei. Erfindungsgemäß führt das Fahrzeug (2) auf der Ausweichtrajektorie (7) eine Rückwärtsbewegung aus (durch den Pfeil angedeutet), wobei der Abstand zwischen dynamisch/semi-dynamischen Hindernis (5) und dem Fahrzeug (2) auf der Ausweichtrajektorie (7) vergrößert wird. Ist der Abstand zwischen Fahrzeug (2) auf der ersten Ausweichtrajektorie (7) und dem dynamisch/semi-dynamischen Hindernis (5) groß genug kann eine zweite Ausweichtrajektorie (8) erstellt werden, welche sicher am dynamisch/semi-dynamischen Hindernis (5) vorbeiführt. Auf diese Art und Weise kann das Fahrzeug (2) sicher und ohne manuellen Eingriff seine Parkposition (3) erreichen.

### Bezugszeichen

- 1: Fahrzeug
- 2: Fahrzeug auf Referenztrajektorie
- 3: Fahrzeug in Parkposition
- 4: ortsstationäre Hindernisse
- 5: dynamisches/semi-dynamisches Hindernis
- 6: Referenztrajektorie
- 7: Ausweichtrajektorie ohne/mit Rückwärtsbewegung
- 8: zweite Ausweichtrajektorie auf erster Ausweichtrajektorie

## Patentansprüche

1. Verfahren zum voll- oder teilautonomen Befahren einer trainierten Referenztrajektorie mit einem Fahrzeug, **dadurch gekennzeichnet, dass** bei der Detektion eines Hindernisses im Bereich der trainierten Referenztrajektorie mittels mindestens eines Sensors, eine Ausweichtrajektorie angefahren wird, wobei als Startpunkt der Ausweichtrajektorie ein entgegen der bisherigen Bewegungsrichtung des Fahrzeuges zurückliegender, schon befahrener Wegpunkt gewählt und das Fahrzeug entgegen der bisherigen Bewegungsrichtung zurück zum Startpunkt der Ausweichtrajektorie und anschließend auf der Ausweichtrajektorie in der ursprünglichen Bewegungsrichtung am Hindernis vorbei auf die trainierten Referenztrajektorie gefahren wird, wobei die Dimensionen und die Bewegungsrichtung des Hindernisses sowohl in der Bewegung des Fahrzeuges in der ursprünglichen Bewegungsrichtung auf das Hindernis zu wie auch entgegen der bisherigen Bewegungsrichtung davon weg, über mindestens einen Sensor erfasst werden und die Festlegung des Startpunktes der Ausweichtrajektorie auf Basis eines Vergleiches der Sensordaten aus beiden Bewegungsrichtungen erfolgt.

2. Verfahren nach Anspruch 1, wobei das Abfahren der Ausweichtrajektorie unter einer oder mehrerer Änderungen der Bewegungsrichtung des Fahrzeuges erfolgt.

3. Verfahren nach einem der vorhergehenden Ansprüche, wobei die Dimensionen des Hindernisses in der Rückwärtsbewegung auf einem schon befahrenen Wegpunkt durch mindestens einen Sensor vermessen und der Startpunkt der Ausweichtrajektorie auf Basis einer oder mehrerer Parameter ausgewählt aus der Gruppe bestehend aus Dimensionen des Hindernisses, maximale erlaubte zurücklegbare Distanz, maximale erlaubte Abweichung von der Trajektorie, maximaler Lenkwinkel, und Fahrzeuggeschwindigkeit bestimmt wird.

4. Verfahren nach einem der vorhergehenden Ansprüche, wobei das Hindernis in der Rückwärtsbewegung auf einem schon befahrenen Wegpunkt durch Sensoren vermessen und der Startpunkt und die Streckenführung der Ausweichtrajektorie auf Basis einer oder mehrerer Parameter ausgewählt aus der Gruppe bestehend aus der aktuellen Bewegungsrichtung des Hindernisses, aktuelle Fahrzeugposition, Ausdehnung des Hindernisses bestimmt wird.

5. Verfahren nach einem der vorhergehenden Ansprüche, wobei vor der Wahl und dem Anfahren des Startpunktes der Ausweichtrajektorie auf einem zurückliegenden Wegpunkt eine erste Ausweichtrajektorie in der ursprünglichen Bewegungsrichtung erstellt und falls möglich befahren wird und in den Fällen, in denen die erste Ausweichtrajektorie in der ursprünglichen Bewegungsrichtung nicht gefahrlos am Hindernis vorbeiführt, eine weitere Ausweichtrajektorie mit einem Startpunkt auf einem zurückliegenden Wegpunkt der vorhergehenden Ausweichtrajektorie erstellt und als neuer Startpunkt der weiteren Ausweichtrajektorie angefahren wird.

6. Verfahren nach einem der vorhergehenden Ansprüche, wobei die maximal zurückgelegte Distanz zwischen der Fahrzeugposition bei der Detektion des Hindernisses und dem Startpunkt der Ausweichtrajektorie größer oder gleich 10% und kleiner oder gleich 200% der Fahrzeugausdehnung in Bewegungsrichtung beträgt.

7. Verfahren nach einem der vorhergehenden Ansprüche, wobei sowohl der Startpunkt als auch die Ausweichrichtung der Ausweichtrajektorie auf Basis eines Vergleiches der Sensordaten aus beiden Bewegungsrichtungen erfolgt.

8. Verfahren nach einem der vorhergehenden Ansprüche, wobei die sensorgestützte Detektion auf Sensordaten mindestens eines Sensors ausgewählt aus der Gruppe bestehend aus Ultraschall-, universellen Laser-, Kamera-, RADAR-Sensoren oder Kombinationen dieser ausgewählt ist.

9. Verfahren nach einem der vorhergehenden Ansprüchen, wobei für den Fall, dass in der Bewegung zum Startpunkt der Ausweichtrajektorie keine hindernisspezifischen Daten erfasst werden, das Fahrzeug wieder in der ursprünglichen Bewegungsrichtung auf der trainierten Referenztrajektorie zum Ziel fährt.

10. Fahrunterstützungssystem für ein Fahrzeug, **dadurch gekennzeichnet, dass** das Fahrunterstützungssystem dazu ausgelegt ist, das Verfahren nach einem der vorhergehenden Ansprüche auszuführen.

11. Fahrzeug mit Fahrunterstützungssystem nach Anspruch 10.

## Claims

1. Method for the fully or partially autonomous driving of a vehicle along a trained reference trajectory, **characterized in that**, when an obstacle in the area of the trained reference trajectory is detected by means of at least one sensor, an evasive trajectory is adopted, wherein a point along the way that has already been driven along, lying further back opposite to the direction of movement of the vehicle so far, is chosen as the starting point of the evasive trajectory and the vehicle is driven back, opposite to the direction of movement so far, to the starting point of the evasive trajectory and is subsequently driven on the evasive trajectory in the original direction of movement past the obstacle to the trained reference trajectory, wherein the dimensions and the direction of movement of the obstacle, both in the movement of the vehicle in the original direction of movement to the obstacle and opposite to the direction of movement so far away from it, are recorded by means of at least one sensor and the starting point of the evasive trajectory is established on the basis of a comparison of the sensor data from both directions of movement.

2. Method according to Claim 1, wherein the evasive trajectory is driven along while making one or more changes in the direction of movement of the vehicle.

3. Method according to one of the preceding claims, wherein the dimensions of the obstacle are measured by at least one sensor in the return movement at a point on the way already driven along and the starting point of the evasive trajectory is determined on the basis of one or more parameters selected from the group consisting of the dimensions of the obstacle, the maximum allowed distance that can be covered, the maximum allowed deviation from the trajectory, the maximum steering angle and the vehicle speed.

4. Method according to one of the preceding claims, wherein the obstacle is measured by sensors in the return movement at the point on the way already driven along and the starting point and the routing of the evasive trajectory are determined on the basis of one or more parameters selected from the group consisting of the current direction of movement of the obstacle, the current position of the vehicle and the extent of the obstacle.

5. Method according to one of the preceding claims, wherein, before choosing and driving to the starting point of the evasive trajectory, a first evasive trajectory in the original direction of movement is created at a point on the way already driven along and if possible is driven along and, in the cases in which the first evasive trajectory in the original direction of movement does not safely pass by the obstacle, a further evasive trajectory with a starting point at a point on the way already driven along of the previous evasive trajectory is created and is driven to as the new starting point of the further evasive trajectory.

6. Method according to one of the preceding claims, wherein the maximum distance covered between the position of the vehicle when the obstacle is detected and the starting point of the evasive trajectory is greater than or equal to 10% and less than or equal to 200% of the extent of the vehicle in the direction of movement.

7. Method according to one of the preceding claims, wherein both the starting point and the evasive direction of the evasive trajectory are based on a comparison of the sensor data from both directions of movement.

8. Method according to one of the preceding claims, wherein the sensor-assisted detection is selected on sensor data of at least one sensor selected from the group consisting of ultrasonic, universal-laser, camera, RADAR sensors or combinations thereof.

9. Method according to one of the preceding claims, wherein, for the case where no obstacle-specific data are recorded in the movement to the starting point of the evasive trajectory, the vehicle again travels to the destination in the original direction of movement on the trained reference trajectory.

10. Vehicle assistance system for a vehicle, **characterized in that** the vehicle assistance system is designed to perform the method according to one of the preceding claims.

11. Vehicle with a vehicle assistance system according to Claim 10.

## Revendications

1. Procédé pour parcourir de manière entièrement ou partiellement autonome une trajectoire de référence apprise avec un véhicule, **caractérisé en ce que** lors de la détection d'un obstacle dans la zone de la trajectoire de référence apprise au moyen d'au moins un capteur, une trajectoire d'évitement est abordée, le point de départ choisi de la trajectoire d'évitement étant un point de cheminement déjà franchi, situé en arrière en sens inverse de la direction de déplacement adoptée jusqu'à présent par le véhicule et le véhicule étant conduit en sens inverse de la direction de déplacement adoptée jusqu'à présent pour revenir au point de départ de la trajectoire d'évitement et ensuite sur la trajectoire d'évitement dans la direction de déplacement originelle en passant l'obstacle sur la trajectoire de référence apprise, les dimensions et la direction de déplacement de l'obstacle, à la fois dans le mouvement du véhicule dans la direction de déplacement originelle vers l'obstacle et aussi en sens inverse de la direction de déplacement adoptée jusqu'à présent en s'éloignant de celui-ci, étant détectées par le biais d'au moins un capteur et la définition du point de départ de la trajectoire d'évitement s'effectuant sur la base d'une comparaison des données de capteur issues des deux directions de déplacement.

2. Procédé selon la revendication 1, la sortie de la trajectoire d'évitement s'effectuant sous une ou plusieurs modifications de la direction de déplacement du véhicule.

3. Procédé selon l'une des revendications précédentes, les dimensions de l'obstacle dans le mouvement en marche arrière vers un point de cheminement déjà franchi étant mesurées et le point de départ de la trajectoire d'évitement étant déterminé sur la base d'un ou plusieurs paramètres choisis dans le groupe composé des dimensions de l'obstacle, de la distance maximale admissible pouvant être parcourue, de l'écart maximal autorisé par rapport à la trajectoire, de l'angle de braquage maximal et de la vitesse du véhicule.

4. Procédé selon l'une des revendications précédentes, l'obstacle dans le mouvement en marche arrière vers un point de cheminement déjà franchi étant mesuré par des capteurs et le point de départ ainsi que le tracé du parcours de la trajectoire d'évitement étant déterminés sur la base d'un ou plusieurs paramètres choisis dans le groupe composé de la direction de déplacement actuelle de l'obstacle, de la position actuelle du véhicule, de l'étendue de l'obstacle.

5. Procédé selon l'une des revendications précédentes, avant le choix du point de départ de la trajectoire d'évitement et le déplacement jusqu'à celui-ci sur un point de cheminement situé en arrière, une première trajectoire d'évitement étant créée dans la direction de déplacement originelle et si possible parcourue et, dans les cas où la première trajectoire d'évitement dans la direction de déplacement originelle ne mène pas à côté de l'obstacle sans danger, une trajectoire d'évitement supplémentaire avec un point de départ sur un point de cheminement situé en arrière de la trajectoire d'évitement précédente étant créée et abordée en tant que nouveau point de départ de la trajectoire d'évitement supplémentaire.

6. Procédé selon l'une des revendications précédentes, la distance maximale parcourue entre la position du véhicule lors de la détection de l'obstacle et le point de départ de la trajectoire d'évitement étant égale ou supérieure à 10 % et inférieure ou égale à 200 % de l'allongement du véhicule dans la direction de déplacement.

7. Procédé selon l'une des revendications précédentes, le point de départ ainsi que la direction d'évitement de la trajectoire d'évitement s'effectuant tous deux sur la base d'une comparaison des données de capteur issues des deux directions de déplacement.

8. Procédé selon l'une des revendications précédentes, la détection assistée par capteur étant choisie sur des données de capteur d'au moins un capteur sélectionné dans le groupe composé de capteurs à ultrasons, de capteurs laser universels, de capteurs à caméra, de capteurs radar ou de combinaisons de ceux-ci.

9. Procédé selon l'une des revendications précédentes, dans le cas où aucune donnée spécifique à l'obstacle n'est détectée dans le mouvement vers le point de départ de la trajectoire d'évitement, le véhicule circulant alors de nouveau dans la direction de déplacement originelle sur la trajectoire de référence apprise.

10. Système d'assistance à la conduite pour un véhicule, **caractérisé en ce que** le système d'assistance à la conduite est conçu pour mettre en œuvre un procédé selon l'une des revendications précédentes.

11. Véhicule équipé d'un système d'assistance à la conduite selon la revendication 10.
